# EUROPEAN PATENT APPLICATION

(11) **EP 4 317 851 A1**
(43) Date of publication of application: **07.02.2024**
(21) Application number: 23189221.7
(22) Date of filing: 02.08.2023
(51) Int. Cl.: F25B 15/04, F25B 30/06

(54) **WASTE HEAT UTILIZING ABSORPTION REFRIGERATION SYSTEM FOR CLIMATE CONTROL AND/OR ELECTRIC SYSTEMS COOLING**

(30) Priority: 03.08.2022 US 202217880116
(71) Applicant: Hamilton Sundstrand Corporation, Charlotte, NC 28217-4578 (US)
(72) Inventor: KILCHYK, Viktor, Lancaster, 14086 (US); MERRITT, Brent J., Southwick, 01077 (US)
(74) Representative: Dehns

(57) **Abstract**

The present disclosure provides absorption refrigeration systems, assemblies and methods utilizing waste heat for climate control and/or cooling (e.g., electric systems cooling; electronics cooling; motor cooling; generator cooling; oil cooling; etc.). More particularly, the present disclosure provides absorption refrigeration systems, assemblies and methods utilizing waste heat (e.g., from aviation/aerospace systems, such as hybrid-electric/electric aircraft/aerospace systems or the like) for climate control and/or cooling (e.g., electronics cooling; motor cooling; generator cooling; oil cooling; electric systems cooling for energy savings on aviation/aerospace systems, such as hybrid-electric/electric aircraft/aerospace systems). In example embodiments, the waste heat utilization provides up to 100% of the energy control system (ECS) input energy, and certain configurations allow for substantially no electric energy input (e.g., allows for gravity flow only).

## Description

### TECHNICAL FIELD

The present disclosure relates to absorption refrigeration systems, assemblies and methods utilizing waste heat for climate control and/or cooling (e.g., electric systems cooling; electronics cooling; motor cooling; generator cooling; oil cooling; etc.) and, more particularly to absorption refrigeration systems, assemblies and methods utilizing waste heat (e.g., from aviation/aerospace systems, such as hybrid-electric/electric aircraft/aerospace systems or the like) for climate control and/or cooling (e.g., electronics cooling; motor cooling; generator cooling; oil cooling; electric systems cooling for energy savings on aviation/aerospace systems, such as hybrid-electric/electric aircraft/aerospace systems or the like).

### BACKGROUND

In general, the electrification of aviation systems or the like can increase the cooling requirements and can increase the amounts of onboard low-grade heat.

It is noted that some onboard low-grade heat can be difficult to use for power generation (e.g., due to some low efficiency corresponding cycles).

### BRIEF DESCRIPTION

The present disclosure provides absorption refrigeration systems, assemblies and methods utilizing waste heat for climate control and/or cooling. More particularly, the present disclosure provides absorption refrigeration systems, assemblies and methods utilizing waste heat (e.g., from aviation/aerospace systems, such as hybrid/electric aircraft/aerospace systems or the like) for climate control and/or cooling (e.g., electronics cooling; motor cooling; generator cooling; oil cooling; electric systems cooling for energy savings on aviation/aerospace systems, such as hybrid/electric aircraft/aerospace systems or the like).

The present disclosure provides for an absorption refrigeration system including a desorber housing an absorbing fluid and a refrigerant; an absorber housing the absorbing fluid and the refrigerant; a condenser and an evaporator, the desorber in fluid communication with the absorber and the condenser, and the evaporator in fluid communication with the condenser and the absorber; and a thermal source that provides thermal energy to the desorber; wherein at least a portion of the thermal source is waste heat from an aircraft system or an aerospace system.

In embodiments, the aircraft system or aerospace system is a hybrid-electric or electric aircraft system or aerospace system.

In embodiments, the waste heat is at a temperature of from about 70 °C or greater.

In embodiments, the absorption refrigeration system is configured to operate without electric energy input.

In embodiments, wherein up to 100% of the input energy to the absorption refrigeration system is provided by the waste heat.

In embodiments, wherein a cooling source output of the absorption refrigeration system is utilized for climate control or cooling of the aircraft system or aerospace system, and wherein the cooling comprises at least one of electric systems cooling, electronics cooling, motor cooling, generator cooling or oil cooling.

In embodiments, wherein a heating rejection output of the absorption refrigeration system is utilized for climate control of the aircraft system or aerospace system.

In embodiments, the absorbing fluid and refrigerant flows in the absorption refrigeration system via gravity and without the use of a pump or without electric energy input to the absorption refrigeration system.

In embodiments, wherein the waste heat is provided by at least one of electric motors or generators, heat rejected by an oil loop, an auxiliary power system or motors, or battery packs of the aircraft system or aerospace system.

In embodiments, the absorbing fluid is at least one of lithium bromide, ammonia, water, methanol, N, N-dimethylformamide (DMF) or an ionic liquid, and the refrigerant is at least one of water, trifluoroethane (R23) or 1,1,1,2-tetrafluoroethane (R134a).

The present disclosure provides for an absorption refrigeration method including providing a desorber housing an absorbing fluid and a refrigerant; providing an absorber housing the absorbing fluid and the refrigerant; providing a condenser and an evaporator, the desorber in fluid communication with the absorber and the condenser, and the evaporator in fluid communication with the condenser and the absorber; and providing thermal energy to the desorber via a thermal source; wherein at least a portion of the thermal source is waste heat from an aircraft system or an aerospace system.

In embodiments, the aircraft system or aerospace system is a hybrid-electric or electric aircraft system or aerospace system.

In embodiments, the waste heat is at a temperature of from about 70 °C or greater.

In embodiments, the absorption refrigeration system operates without electric energy input.

In embodiments, wherein up to 100% of the input energy to the absorption refrigeration system is provided by the waste heat.

In embodiments, further comprising utilizing a cooling source output of the absorption refrigeration system for climate control or cooling of the aircraft system or aerospace system, and wherein the cooling comprises at least one of electric systems cooling, electronics cooling, motor cooling, generator cooling or oil cooling.

In embodiments, further comprising utilizing a heating rejection output of the absorption refrigeration system for climate control of the aircraft system or aerospace system.

In embodiments, the absorbing fluid and refrigerant flows in the absorption refrigeration system via gravity and without the use of a pump or without electric energy input to the absorption refrigeration system.

In embodiments, wherein the waste heat is provided by at least one of electric motors or generators, heat rejected by an oil loop, an auxiliary power system or motors, or battery packs of the aircraft system or aerospace system.

In embodiments, the absorbing fluid is at least one of lithium bromide, ammonia, water, methanol, N, N-dimethylformamide (DMF) or an ionic liquid, and the refrigerant is at least one of water, trifluoroethane (R23) or 1,1,1,2-tetrafluoroethane (R134a).

The above described and other features are exemplified by the following figures and detailed description.

Any combination or permutation of embodiments is envisioned. Additional features, functions and applications of the disclosed systems, assemblies and methods of the present disclosure will be apparent from the description which follows, particularly when read in conjunction with the appended figures. All references listed in this disclosure are hereby incorporated by reference in their entireties.

### BRIEF DESCRIPTION OF THE DRAWINGS

The following figures are example embodiments wherein the like elements are numbered alike.

Features and aspects of embodiments are described below with reference to the accompanying drawings, in which elements are not necessarily depicted to scale.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed systems, assemblies and methods, reference is made to the appended figures, wherein:
FIG. 1 is a schematic view of an example absorption refrigeration system, according to the present disclosure;
FIG. 2 is a schematic view of another example absorption refrigeration system, according to the present disclosure; and
FIG. 3 is a schematic view of another example absorption refrigeration system, according to the present disclosure.

### DETAILED DESCRIPTION

The example embodiments disclosed herein are illustrative absorption refrigeration systems, and assemblies of the present disclosure and methods/techniques thereof. It should be understood, however, that the disclosed embodiments are merely examples of the present disclosure, which may be embodied in various forms. Therefore, details disclosed herein with reference to example absorption refrigeration systems and associated processes/techniques of fabrication/assembly and use are not to be interpreted as limiting, but merely as the basis for teaching one skilled in the art how to make and use the assemblies/systems and/or alternative assemblies/systems of the present disclosure.

The present disclosure provides absorption refrigeration systems, assemblies and methods utilizing waste heat for climate control and/or cooling.

More particularly, the present disclosure provides absorption refrigeration systems, assemblies and methods utilizing waste heat (e.g., from aviation/aerospace systems, such as hybrid-electric/electric aircraft/aerospace systems or the like) for climate control and/or cooling (e.g., electronics cooling; motor cooling; generator cooling; oil cooling; electric systems cooling for energy savings on aviation/aerospace systems, such as hybrid-electric/electric aircraft/aerospace systems or the like).

In example embodiments, the waste heat utilization provides up to 100% of the energy control system (ECS) input energy, and certain configurations allow for substantially no electric energy input (e.g., allows for gravity flow only). In other embodiments, an electrically driven pump or the like can be utilized.

It is noted that some onboard power generation cycles (e.g., from aviation/aerospace systems) may not be viable for some low-grade thermal energy applications. However, the present disclosure provides that it is possible to employ a refrigeration cycle (e.g., an example absorption refrigeration system 10, discussed below) utilizing such low-grade thermal energy.

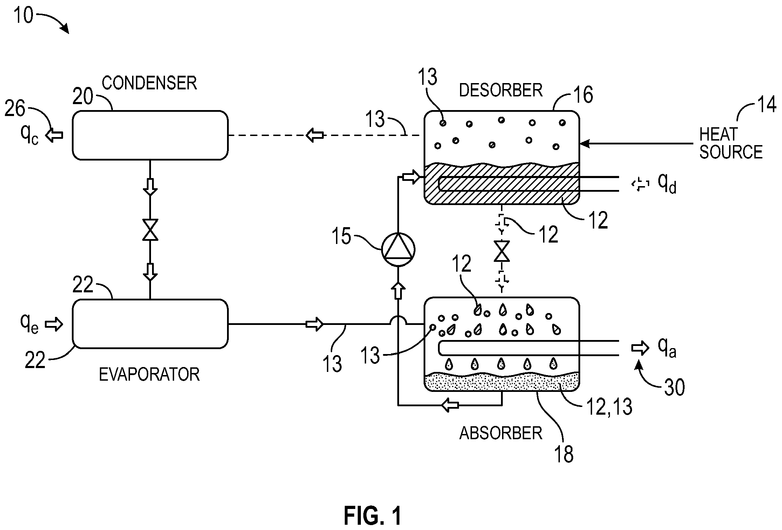

FIG. 1 is a schematic view of an example absorption refrigeration system 10, according to certain embodiments of the present disclosure.

In general, absorption refrigeration system 10 is a system that uses a heat source to provide the energy needed to drive a cooling process.

In example embodiments, absorption refrigeration system 10 is an absorption refrigeration system that utilizes waste heat (e.g., from aviation/aerospace systems, such as hybrid/electric aircraft/aerospace systems or the like) for climate control and/or electric systems cooling (e.g., for energy savings on aviation/aerospace systems, such as hybrid/electric aircraft/aerospace systems or the like), as discussed further below.

It is noted that up to 100% of the energy input to absorption cycles of absorption refrigeration system 10 can be in the form of low-grade thermal energy (e.g., thermal energy greater than 90° C).

In example embodiments, absorption refrigeration system 10 is a lithium bromide absorption refrigeration system 10, and may also provide for air conditioning.

It is noted that the compressor in such a system 10 can be replaced by absorbing fluid 12, refrigerant 13 and a thermal or heat source 14, and gravity may substantially eliminate pumping of the absorbing fluid 12 and refrigerant 13 in some embodiments.

In an example water-lithium bromide vapor absorption refrigeration system 10, water can be used as the refrigerant 13, and lithium bromide can be used as the absorbing fluid 12.

In general and as shown in FIG. 1, absorption refrigeration system 10 includes a desorber 16, an absorber 18, a condenser 20 and an evaporator 22.

In general, the desorber 16 houses an absorbing fluid 12 and a refrigerant 13, and the absorber 18 houses the absorbing fluid 12 and the refrigerant 13.

As discussed further below, the desorber 16 is in fluid communication with the absorber 18 and condenser 20, and an evaporator 22 is in fluid communication with the condenser 20 and the absorber 18.

A thermal source 14 provides thermal energy to the desorber 16.

It is noted that absorption refrigeration system 10 can utilize several environmentally friendly working fluids 12, 13 such as, for example, lithium bromide, ammonia, water (with or without ethylene glycol as antifreeze), methanol and/or novel agents (e.g., ionic liquids). Some systems 10 can be non-toxic.

Moreover, in addition to utilizing water as the refrigerant 13 and lithium bromide as the absorbing fluid 12, it is noted that water can be used as the refrigerant 13 and ammonia (NH₃) can be used as the absorbing fluid 12.

In other example embodiments and for some low temperature operation, trifluoroethane (R23) or 1,1,1,2-tetrafluoroethane (R134a) can be used as the refrigerant 13, and N, N-dimethylformamide (DMF) can be used as the absorbing fluid 12.

In general, absorption refrigeration system 10 utilizes low-grade heat for thermal/heat source 14.

In example use, in the absorber 18, the absorbing fluid 12 (e.g., lithium bromide) absorbs the refrigerant 13 (e.g., water), creating a solution of absorbing fluid 12 and refrigerant 13. This solution 12, 13 can flow (e.g., be pumped by a pump 15 or the like, or flow via gravity in some embodiments) to the desorber 16 where the solution 12, 13 is heated via thermal/heat source 14. Thereafter, the refrigerant 13 gets vaporized and moves to the condenser 20, where the refrigerant 13 is cooled (e.g., from an external source), and the absorbing fluid 12 flows from the desorber 16 to the absorber 18 where the absorbing fluid 12 further absorbs refrigerant 13 coming from the evaporator 22. It is noted that refrigerant 13 also moves from condenser 20 to evaporator 22 (e.g., via a pump or the like, or flow via gravity in some embodiments).

In example embodiments, it is noted that the absorption refrigeration system 10 can operate at a desorber 16 temperature in a range from as low as about 70 °C or greater.

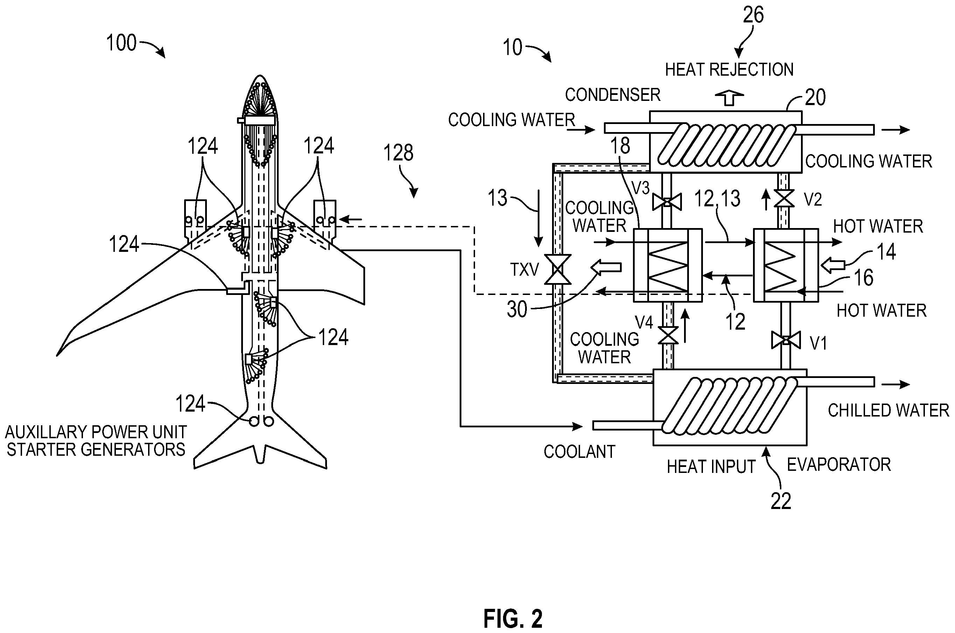

FIG. 2 is a schematic view of another example absorption refrigeration system 10. In general, absorption refrigeration system 10 is in thermal communication with aviation/aerospace system 100, with system 100 providing thermal/heat source 14 to desorber 16. In some embodiments, system 100 takes the form of a hybrid/electric aircraft/aerospace system 100 or the like.

It is noted that the lower temperature (e.g., about 70 °C or above) to the desorber 16 provides opportunity for waste heat 14 recovery from the system 100. For example, there are various sources 124 of waste heat 14 from aviation/aerospace system 100 that can be provided as thermal/heat source 14 to desorber 16, including, without limitation, propulsion system/motors/engines 124, electric/hybrid motors (e.g., ducted or open fan electric or hybrid motors 124) and/or generators 124, heat rejected by the oil loop 124, auxiliary power system and/or motors 124 and/or battery packs 124. These heat sources 124 of system 100 can provide heat source 14 to desorber 16 of system 10.

Moreover, some additional advantages of system 10 in connection with aviation/aerospace system 100 may be the absence of electric input to systems 10 (e.g., system 10 operates with gravity driven flow of fluids 12, 13 as discussed above).

Furthermore, it is noted that the heat rejection 26 from condenser 16 may be done using ambient air or fuel with a direct heat exchanger, or through an intermediate coolant line (e.g., an engine cooling line from system 100). Also, the heat rejection 26 from condenser 16 can provide heating to cabin 128 of system 100.

Additionally, the cooling source 30 from absorber 18 can provide cooling to system 100 (e.g., for air conditioning to cabin 128 of system 100 and/or for cooling of electrical equipment 124 of system 100).

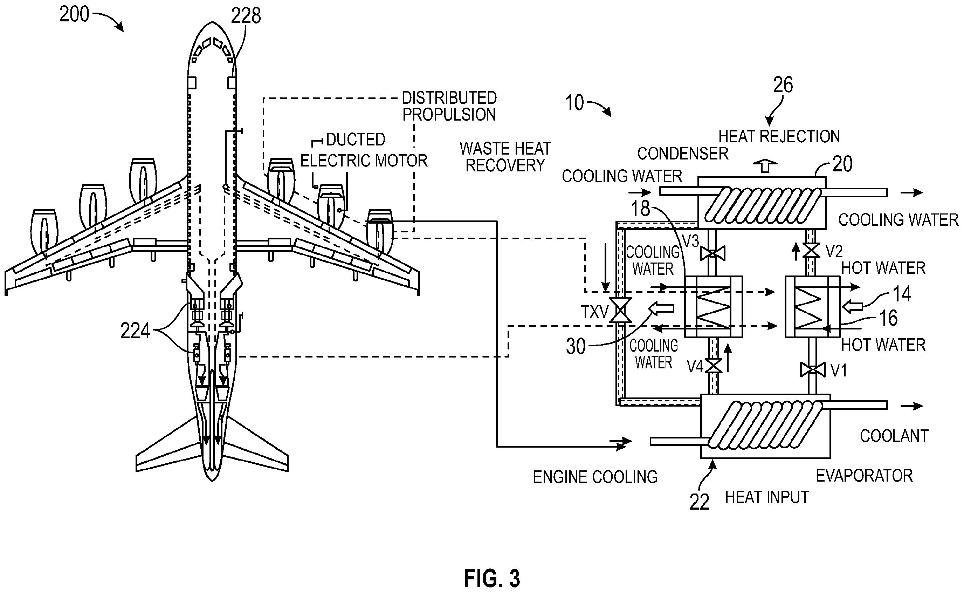

FIG. 3 is a schematic view of another example absorption refrigeration system 10. In general, absorption refrigeration system 10 is in thermal communication with aviation/aerospace system 200, with system 200 providing thermal/heat source 14 to desorber 16. In some embodiments, system 200 takes the form of a hybrid/electric aircraft/aerospace system 200 or the like.

Similar to system 100 and system 10 discussed above, absorption refrigeration system 10 is in thermal communication with aviation/aerospace system 200, with system 200 providing thermal/heat source 14 to desorber 16. In some embodiments, system 200 takes the form of a hybrid/electric aircraft/aerospace system 200 or the like.

It is noted that the lower temperature (e.g., about 70 °C or above) to the desorber 16 provides opportunity for waste heat 14 recovery from the system 200. For example, there are various sources 224 of waste heat 14 from aviation/aerospace system 200 that can be provided as thermal/heat source 14 to desorber 16, including, without limitation, propulsion system/motors/engines 224, electric/hybrid motors (e.g., ducted or open fan electric or hybrid motors 224) and/or generators 224, heat rejected by the oil loop 224, auxiliary power system and/or motors 224 and/or battery packs 224. These heat sources 224 of system 100 can provide heat source 14 to desorber 16 of system 10.

Moreover, some additional advantages of system 10 in connection with aviation/aerospace system 200 may be the absence of electric input to systems 10 (e.g., system 10 operates with gravity driven flow of fluids 12, 13 as discussed above).

Furthermore, it is noted that the heat rejection 26 from condenser 16 may be done using ambient air or fuel with a direct heat exchanger, or through an intermediate coolant line (e.g., an engine cooling line from system 200). Also, the heat rejection 26 from condenser 16 can provide heating to cabin 228 of system 200.

Additionally, the cooling source 30 from absorber 18 can provide cooling to system 200 (e.g., for air conditioning to cabin 228 of system 200 and/or for cooling of electrical equipment 224 of system 100).

There are many benefits of the systems, assemblies and methods of the present disclosure, including, without limitation: the waste heat utilization provides up to 100% of the energy control system (ECS) or system 10 input energy (e.g., up to 100% of the input energy to the absorption refrigeration system 10 is provided by the waste heat from system 100/200), and certain configurations allow for substantially no electric energy input (e.g., allows for gravity flow only) needed to system 10; low noise and/or high reliability of system 10 due to the minimum of moving parts of system 10; the choice of various working fluids 12, 13 for system 10; cooling provided for electrical equipment (124, 224) and/or air conditioning for cabins 128, 228 and/or the system 10 may provide cabin (128, 228) heating and/or cooling, as discussed above.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless defined otherwise, technical and scientific terms used herein have the same meaning as is commonly understood by one of skill in the art to which this application belongs.

Although the systems and methods of the present disclosure have been described with reference to example embodiments thereof, the present disclosure is not limited to such example embodiments and/or implementations. Rather, the systems and methods of the present disclosure are susceptible to many implementations and applications, as will be readily apparent to persons skilled in the art from the disclosure hereof, that fall within the scope of the claims.

## Claims

1. An absorption refrigeration system comprising:
a desorber (16) housing an absorbing fluid (12) and a refrigerant (13);
an absorber (18) housing the absorbing fluid and the refrigerant;
a condenser (20) and an evaporator (22), the desorber in fluid communication with the absorber and the condenser, and the evaporator in fluid communication with the condenser and the absorber; and
a thermal source (14) that provides thermal energy to the desorber;
wherein at least a portion of the thermal source is waste heat from an aircraft system or an aerospace system.

2. The system of claim 1, wherein a cooling source output of the absorption refrigeration system is utilized for climate control or cooling of the aircraft system or aerospace system; and
wherein the cooling comprises at least one of electric systems cooling, electronics cooling, motor cooling, generator cooling or oil cooling.

3. The system of claim 1 or 2, wherein a heating rejection output of the absorption refrigeration system is utilized for climate control of the aircraft system or aerospace system.

4. An absorption refrigeration method comprising:
providing a desorber (16) housing an absorbing fluid (12) and a refrigerant (13);
providing an absorber (18) housing the absorbing fluid and the refrigerant;
providing a condenser (20) and an evaporator (22), the desorber in fluid communication with the absorber and the condenser, and the evaporator in fluid communication with the condenser and the absorber; and
providing thermal energy to the desorber via a thermal source (14);
wherein at least a portion of the thermal source is waste heat from an aircraft system or an aerospace system.

5. The method of claim 4, further comprising utilizing a cooling source output of the absorption refrigeration system for climate control or cooling of the aircraft system or aerospace system; and
wherein the cooling comprises at least one of electric systems cooling, electronics cooling, motor cooling, generator cooling or oil cooling.

6. The system of claim 4 or 5, further comprising utilizing a heating rejection output of the absorption refrigeration system for climate control of the aircraft system or aerospace system.

7. The system of any of claims 1 to 3 or the method of any of claims 4 and 5, wherein the aircraft system or aerospace system is a hybrid-electric or electric aircraft system or aerospace system.

8. The system or method of any preceding claim, wherein the waste heat is at a temperature of from about 70 °C or greater.

9. The system or method of any preceding claim, wherein the absorption refrigeration system operates without electric energy input.

10. The system or method of any preceding claim, wherein up to 100% of the input energy to the absorption refrigeration system is provided by the waste heat.

11. The system or method of any preceding claim, wherein the absorbing fluid and refrigerant flows in the absorption refrigeration system via gravity and without the use of a pump or without electric energy input to the absorption refrigeration system.

12. The system or method of any preceding, wherein the waste heat is provided by at least one of electric motors or generators, heat rejected by an oil loop, an auxiliary power system or motors, or battery packs of the aircraft system or aerospace system.

13. The system or method of any preceding claim, wherein the absorbing fluid is at least one of lithium bromide, ammonia, water, methanol, N, N-dimethylformamide, DMF, or an ionic liquid; and
wherein the refrigerant is at least one of water, trifluoroethane, R23, or 1,1,1,2-tetrafluoroethane, R134a.
